# EUROPEAN PATENT SPECIFICATION

(11) **EP 1 806 021 B1**
(45) Date of publication and mention of the grant of the patent: **11.07.2018**
(21) Application number: 05792976.2
(22) Date of filing: 27.09.2005
(51) Int. Cl.: H04L 29/06, H04N 7/14, H04W 92/18

(54) **VIDEO TELEPHONY SERVICE METHOD IN MOBILE COMMUNICATION NETWORK**
VIDEOTELEFONIE -DIENSTVERFAHREN IN EINEM MOBILKOMMUNIKATIONSNETZ
PROCÉDÉ PERMETTANT DE FOURNIR UN SERVICE DE VISIOPHONIE DANS UN RÉSEAU DE COMMUNICATION MOBILE

(30) Priority: 22.10.2004 KR 20040084766; 15.09.2005 KR 20050086049
(43) Date of publication of application: 11.07.2007
(73) Proprietor: SK Telecom Co., Ltd., Seoul 110-999 (KR)
(72) Inventor: KIM, Nam-Gun, Seoul 137-073 (KR); KIM, Hyun-Wook, Seongnam-si, Gyeonggi-do 463-010 (KR); CHOI, Goon-Don, Seongnam-si, Gyeonggi-do 463-725 (KR); HAN, Chang-Moon, Seoul 156-035 (KR)
(74) Representative: Isarpatent
(86) International application number: PCT/KR2005/003203
(87) International publication number: WO 2006/043756

(56) References cited:
- WO-A1-2004/054221
- KR-A- 2004 056 781
- US-A- 5 999 525
- US-A1- 2004 174 817
- US-B1- 6 775 255
- "Extended Fast Connect feature", ITU-T RECOMMENDATION - SERIES H: AUDIOVISUAL AND MULTIMEDIA SYSTEMS - SUPPLEMENTARY SERVICES FOR MULTIMEDIA, ITU, US , vol. H.460.6 1 November 2002 (2002-11-01), pages 1-20, XP008123429, Retrieved from the Internet: URL:http://www.itu.int/rec/T-REC-H.460.6-2 00211-I/en

## Description

### Technical Field

The present invention relates, in general, to a video telephony service method and, more particularly, to a video telephony service method in a mobile communication network for reducing a video telephony initiation time.

### Background Art

A video telephony service enables a user to communicate while viewing images of the other party through a mobile communication terminal to which a camera is attached, and can be classified into a circuit-switched method using a Mobile Switching Center (MSC) and a packet-switched method using an all-Internet Protocol (IP) network.

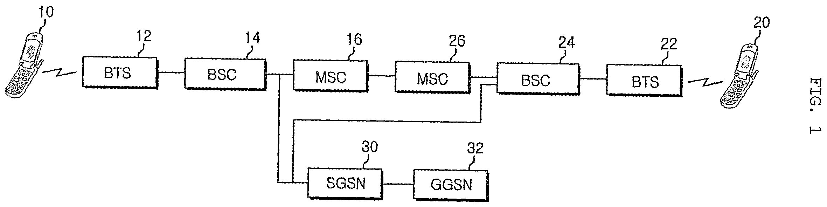

FIG. 1 is a block diagram showing an example of the construction of a mobile communication network for providing video telephony service.

When a video telephony call is attempted by a calling mobile communication terminal 10, a base station 12 receives the call, and performs video telephony with a called mobile communication terminal 20 through an MSC 26, a Base Station Controller - (BSC) 24, and a base station 22 that are connected with the called mobile communication terminal 20 through a BSC 14 and an MSC 16. Video telephony service, as described above, is provided through the MSCs 16 and 26 in the case where the circuit-switched method is employed, and the service is provided through a General Packet Radio Service (GPRS) providing register, that is, a Serving GPRS Support Node (SGSN) 30, and a GPRS gate providing register, that is, a Gateway GPRS Support Register (GGSN), that are connected with the BSCs 14 and 24, in the case where the packet-switched method using an all-IP network is employed.

In order to provide video telephony service, an international standard protocol, for example, H.323 or H.324M, defined by International Telecommunication Union (ITU), must be implemented in a mobile communication system. H.323 is a system protocol that enables the provision of video telephony service in an IP network, that is, a packet data network, H.324 is a system protocol developed on the basis of a public network, and H.324 Mobile (M) is a system protocol that has been improved for mobile communication.

In a video telephony service using H.324M as a system protocol, the compression and encoding of moving images are performed using H.261 and H.263, and the encoding of voice is performed using G.723.1. With regard to this, H.261 is a moving image compression/encoding standard for video telephony and video conferencing, and H.263 and MPEG-4 are video compression/encoding standards that have been improved more than H.261. Furthermore, G.723.1 is a standard for converting voice signals to be less than 8 Kbps. A video standard used in 3GPP is 3G-324M, which was created by modifying H.324M to be suitable for 3GPP. 3G-324M is considerably different from H.324M in that Adaptive Multi-Rate (AMR) is basically used as a voice codec, and G.723.1 is an option.

Furthermore, H.324M uses H.223 to multiplex moving images, voice and data, and uses H.245 to allocate a point-to-point or point-to-multipoint channel by selecting a voice codec and performing a function of logical channel signaling.

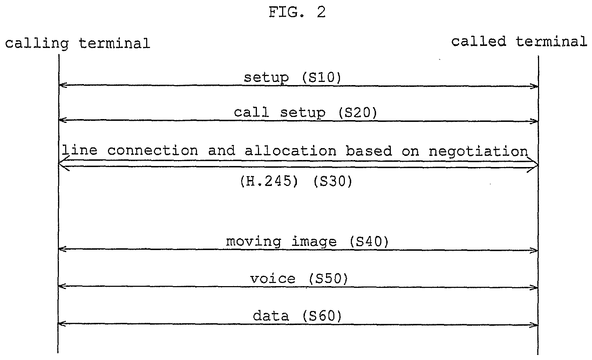

FIG. 2 is a flowchart illustrating a general video telephony service method, and shows an example of using a 3G-324M protocol.

As shown in the drawing, when a calling mobile communication terminal attempts a call to use video telephony service, a setup process is performed using H.223 at step S10 and, thereafter, the call is set up at step S20.

After the call setup has been completed, a line connection and allocation process based on negotiation between calling and called mobile communication terminals using H.245 is performed at step S30. After a communication path has been established accordingly, moving images, voice, and data (picture, photograph and the like) are exchanged between the calling and called mobile communication terminals at steps S40 to S60.

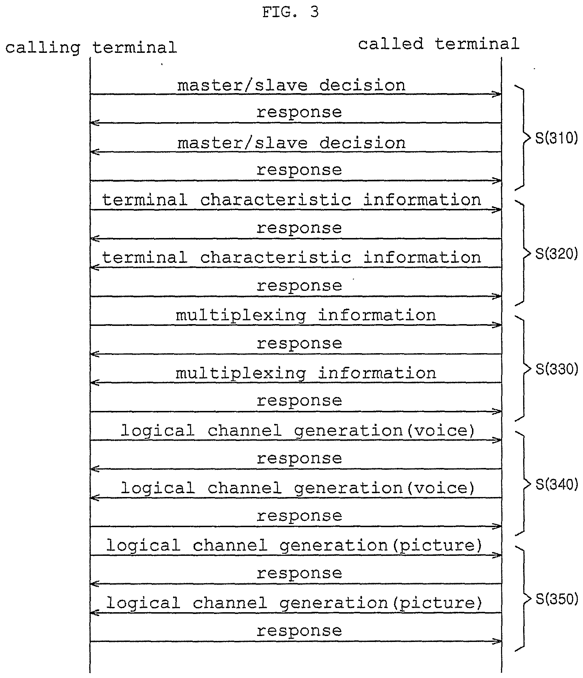

FIG. 3 is a flowchart illustrating the line connection and allocation process of FIG. 2 in detail.

The line connection and allocation process is a process of exchanging information about the characteristics of mobile communication terminals and, thereby, making settings so that video telephony is made possible, in the case where voice codecs or video codecs used for the calling and called mobile communication terminals are different from each other.

As shown in the drawing, for line connection and allocation between the calling and called mobile communication terminals, a master/slave decision and response process is performed at step S310, a terminal characteristic information exchange process at S320, a multiplexing information exchange process at step S330, a logical channel generation process for voice transmission at step S340, and a logical channel generation process for video transmission at step S350.

As described above, the current negotiation process for video telephony is complicated, and a lot of time is required, so that a problem occurs in that the communication path is not established immediately after call setup, and communication is not performed, and the delay time occurs in proportion to the time for which the negotiation process is performed.

WO patent publication no. 2004/054221 discloses methods of establishing multimedia telecommunication (a multimedia "call") between equipment ("terminals"). More particularly, the reference provides methods for reducing the time required to establish calls between terminals that implement the ITU-T H.324 Recommendation and other Standards and Recommendations derived from or related to this such as the 3G-324M recommendation developed and adopted by the Third Generation Partnership Projects (3GPP and 3GPP2).; More specifically, it relates to (i) a method and apparatus for concatenating the H.245 messages that are required to pass between the terminals at the start of the call to establish the capabilities of both terminals and agree on the type and format of media and data to be exchanged (ii) a method and apparatus for using non-standard H.245 messages or standard H.245 messages with non-standard fields to accelerate such establishment and (iii) a method and apparatus of informing each terminal of the capabilities of the other and proposing the type and format of media and data to be exchanged by means of any user-defined fields that are inserted in the call signaling protocol that is used for bearer establishment prior to the start of the H.324 stage of the call.

Reference "Extended Fast Connect Feature", ITU-T RECOMMENDATION - SERIES H: AUDIOVISUAL AND MULTIMEDIA SYSTEMS - SUPPLEMENTARY SERVICES FOR MULTIMEDIA, ITU, US, vol. H.460.6 1 November 2002 discloses a method for the rapid creation or reconfiguration of media streams under the control of endpoints or third parties. The method is directed to operations such as the redirection of a caller to an automatic voice response unit, or the initiation of new media channels, such as a modern data channel, in response to detected events, such as modern answer tone. The method also supports the rapid redirection of media streams from a called party to an automatic answering device.

### Disclosure of the Invention

Accordingly, the present invention has been made keeping in mind the above problems occurring in the prior art, and an object of the present invention is to provide a video telephony service method, in which a negotiation process for video telephony is simplified, so that communication can be performed without a time delay after call setup.

Another object of the present invention is to provide a video telephony service method, which allows the transmission and reception time of data (moving images, voice, media or the like) between calling and called terminals to be clarified while quickly initiating video telephony.

### Brief Description of the Drawings

FIG. 1 is a block diagram showing an example of the construction of a mobile communication network for providing video telephony service;
FIG. 2 is a -flowchart illustrating a video telephony
   service method;
FIG. 3 is a flowchart illustrating the line connection and allocation process of FIG. 2 in detail;
FIG. 4 is a flowchart illustrating a video telephony service method according to a first embodiment of the present invention;
FIG. 5 is a flowchart illustrating a video telephony service method according to a second embodiment of the present invention;
FIG. 6 is a flowchart illustrating a video telephony service method according to a third embodiment of the present invention;
FIG. 7 is a flowchart illustrating a video telephony service method according to a fourth embodiment of the present invention; and
FIG. 8 is a flowchart illustrating a video telephony service method according to a fifth embodiment of the present invention.

### Detailed Description of the Invention

In order to accomplish the above object, the present invention provides a video telephony service method between mobile communication terminals according to independent claim 1. In the method which can perform video telephony through a mobile communication system, in a mobile communication network, each of the mobile communication terminals storing profile information, the method includes the first step of the mobile communication system setting up a call between calling and called mobile communication terminals, as the calling mobile communication terminal attempts the call; the second step of the mobile communication system transmitting the profile information of the calling mobile communication terminal to the called mobile communication terminal, as the calling mobile communication terminal transmits the profile information thereof to the mobile communication system; the third step of the called mobile communication terminal consulting the profile information received from the calling mobile communication terminal, and transmitting a response signal to the mobile communication system after establishing conditions for video telephony if it is determined that video telephony is possible for a received profile, and the mobile communication system transmitting the response signal to the calling mobile communication terminal; and the fourth step of the mobile communication system establishing a communication path between the calling and called mobile communication terminals.

In addition, another embodiment of the present invention provides a video telephony service method between mobile communication terminals, each of the mobile communication terminals storing profile information, the method includes the - first step of the mobile communication system setting up a call between calling and called mobile communication terminals, as the calling mobile communication terminal attempts the call; the second step of the mobile communication system transmitting the profile information of the calling mobile communication terminal to the called mobile communication terminal, as the calling mobile communication terminal transmits the profile information thereof to the mobile communication system; the third step of performing a master/slave decision and response process, a terminal characteristic information exchange process, a multiplexing information exchange process, a logical channel generation process for voice transmission, and a logical channel generation process for video transmission, thus allowing negotiation to be performed between the calling mobile communication terminal and the called mobile communication terminal, if the called mobile communication terminal does not transmit a signal in response to the profile information to the calling mobile communication terminal within a designated period; and the fourth step of the mobile communication system establishing a communication path between the calling and called mobile communication terminals.

In addition, a further embodiment of the present invention provides a video telephony service method including the first step of the mobile communication system setting up a call between calling and called mobile communication terminals, as the calling mobile communication terminal attempts the call; the second step of initiating a line connection and allocation process between the calling and called mobile communication terminals; the third step of the mobile communication system transmitting the profile information of the calling mobile communication terminal to the called mobile communication terminal, as the calling mobile communication terminal transmits the profile information thereof to the mobile communication system; the fourth step of the called mobile communication terminal consulting the profile information received from the calling mobile communication terminal, and transmitting a response signal to the mobile communication system after establishing conditions for video telephony if it is determined that video telephony is possible for a received profile, and the mobile communication system transmitting the response signal to the calling mobile communication terminal; the fifth step of interrupting the line connection and allocation process initiated at the second step; and the sixth step of the mobile communication system establishing a communication path between the calling and called mobile communication terminals.

A preferred embodiment of the present invention is described in detail with reference to the accompanying drawings below. - The case of .providing video telephony service using the 3G-324M protocol is described as an example below.

Since the types of a voice codec and a video codec, multiplexing information, and the type of a logical channel, which are used for video telephony in mobile communication terminals, are limited by the characteristics of the hardware of mobile communication terminals, the mobile communication terminals that enable video telephony may be classified into several types. Accordingly, the profiles for the mobile communication terminals, including the voice codec information, video codec information, multiplexing information, and logical channel information of the mobile communication terminal, may be generated in advance, and used for a negotiation process for video telephony.

This is possible because H.245, which is used to perform the negotiation process, includes a user input indication message. That is, video telephony can be immediately initiated in such a manner that profile information for video telephony is stored in each of the mobile communication terminals, a profile is transmitted to the other party's mobile communication terminal during the negotiation process for video telephony using the user input indication message, and a response is received. By doing so, video telephony can be initiated without - performing a complicated negotiation process and, thereby, the time delay occurring when video telephony is performed can be minimized.

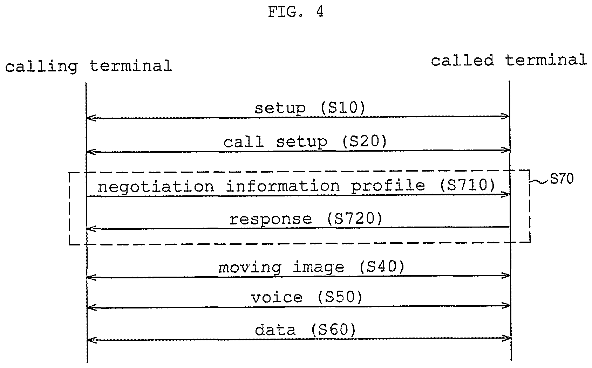

FIG. 4 is a flowchart illustrating a video telephony service method according to a first embodiment of the present invention. For the present invention, mobile communication terminals, which can perform video telephony, must previously store profiles, including voice codec information, video codec information, multiplexing information, logical channel information, etc.

First, when a calling mobile communication terminal attempts a call to use video telephony service, a setup process is performed using H.223 at step S10 and, thereafter, a call is set up at step S20. After the call setup, a negotiation process is performed using H.245 at step S70.

When the calling mobile communication terminal transmits the previously stored profile information to the mobile communication system so as to perform the negotiation process of step S70, the mobile communication system transmits the profile information to the called mobile communication terminal at step S710. The called mobile communication terminal consults the profile information received from the mobile communication system, and transmits a response signal to the mobile communication system after establishing conditions for video telephony if it is determined that--video telephony is possible, at step 720.

Subsequently, after a communication path has been established, moving images, voice, and data (pictures, photographs and the like) are exchanged between the calling and called mobile communication terminals at steps S40 to S60.

As described above, in the present invention, the time required from call setup to the initiation of communication can be reduced because the negotiation process is simplified. Accordingly, any inconvenience that occurred due to the user's waiting for video telephony can be solved.

Meanwhile, although each of the mobile communication terminals may use a single voice codec and a single video codec, it may use a plurality of voice codecs (for example, G.723.1 and AMR) and a plurality of video codecs (H.261, H.263 and the like). In this case, each mobile communication terminal generates a plurality of profiles for video telephony and assigns priorities thereto. Thereafter, a profile having the highest priority is transmitted to the called mobile communication terminal. If the called mobile communication terminal does not respond to the profile, the profiles are transmitted to the called mobile communication terminal in descending order of priority until the called mobile communication terminal transmits a -response signal.

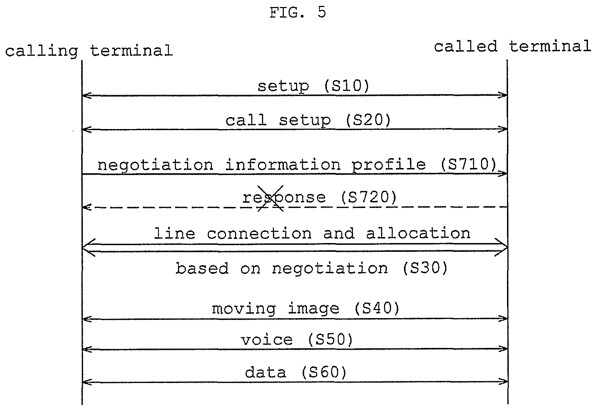

FIG. 5 is a flowchart illustrating a video telephony service method according to a second embodiment of the present invention, and shows the case where a response signal from a called mobile communication terminal in response to the transmission of profile information is not received during a negotiation process according to the present invention. The present embodiment can be applied to the case where the called mobile communication terminal consults the profile information of a calling mobile communication terminal, and video telephony with the calling mobile communication terminal cannot be performed as a result of the determination of whether video telephony is possible.

First, when the calling mobile communication terminal attempts a call to use video telephony service, a setup process is performed using H.223 at step S10 and, thereafter, a call is set up at step S20. In order to perform a negotiation process using H.245 after call setup, the calling mobile communication terminal transmits previously stored profile information to the mobile communication system, and the mobile communication system transmits the profile information to the called mobile communication terminal at step S710.

Thereafter, if a response signal is not received from the called terminal within a designated period, line connection and allocation are performed based on a general negotiation process at step S30. That is, a master/slave decision and response process, a terminal characteristic information exchange process, a multiplexing information exchange process, a logical channel generation process for voice transmission, and a logical channel generation process for video transmission are performed.

After a communication path has been established, moving images, voice, and data (pictures, photographs and the like) are exchanged between the calling and called mobile communication terminals at steps S40 to S60.

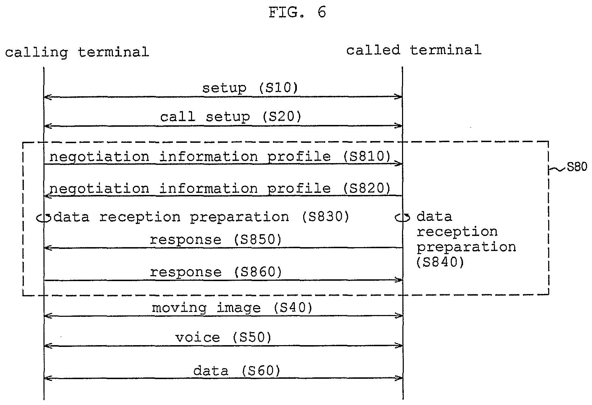

FIG. 6 is a flowchart illustrating a video telephony service method according to a third embodiment of the present invention. For the present invention, mobile communication terminals, which can perform video telephony, must previously store a profile, including voice codec, video codec information, multiplexing information, logical channel information, etc.

First, when a calling mobile communication terminal attempts a call to use video telephony service, a setup process is performed using H.223 at step S10 and, thereafter, a call is set up at step S20. After call setup, a negotiation process is performed using H.245 at step S80.

When the calling mobile communication terminal first transmits the previously stored profile information thereof to the mobile communication system so as to perform the negotiation process at step S80, the mobile communication system transmits the profile information to the called mobile communication terminal at step S810. In the same manner, when the called mobile communication terminal transmits the previously stored profile information thereof to the mobile communication system, the mobile communication system transmits the profile information to the calling mobile communication terminal at step S820. The calling and called mobile communication terminals, each having received the corresponding profile information, get ready to receive data from the other party while waiting for a response from the other party at steps S830 and S840.

Thereafter, the called mobile communication terminal consults the profile information of the origination side, which is received from the mobile communication system, and transmits a response signal to the calling mobile communication terminal through the mobile communication system after establishing conditions for video telephony if it is determined that video telephony is possible, at step S850. The calling mobile communication terminal consults the profile information of the receiving side, which is received from the mobile communication system, and transmits a response signal to the called mobile communication terminal through the mobile communication system after establishing conditions for video telephony if it is determined that video telephony is possible, at step S860.

Subsequently, after a communication path has been established, moving images, voice, and data (pictures, photographs and the like) are exchanged between the calling and called mobile communication terminals at steps S40 to S60.

As described above, in the present embodiment, the profile information of the calling mobile communication terminal is transmitted to the called mobile communication terminal and the profile information of the called mobile communication terminal is further transmitted to the calling mobile communication terminal, so that the time required to transmit and receive data can be clarified after the negotiation process has been successfully completed.

Furthermore, in the case where a plurality of pieces of profile information are stored in each of the mobile communication terminals, the plurality of pieces of profile information may be transmitted together or sequentially at steps S810 and S820 of transmitting negotiation information profiles, and the mobile communication terminal that receives the profile information may select an optimal profile and transmit a response signal, including information about the selected profile.

Meanwhile, although not shown in FIG. 6, in the case where a response signal is not received from either of the mobile - communication terminals within a designated period after the transmission of the profile information to the called and calling mobile communication terminals, line connection and allocation are performed based on a general negotiation process. That is, a master/slave decision and response process, a terminal characteristic information exchange process, a multiplexing information exchange process, a logical channel generation process for voice transmission, and a logical channel generation process for video transmission are performed.

In the video telephony service methods according to the first to third embodiments described above, the negotiation process can be reduced using the profile information for video telephony. However, if the negotiation process fails, the negotiation must be performed based on the general negotiation process (refer to FIG. 3), that is, the line connection and allocation process. Therefore, since the time for performing the reduced negotiation process and the time for performing the general line connection and allocation process are required, it is necessary to reduce the unnecessary time. For this purpose, a scheme of simultaneously processing the line connection and allocation process using general H.245 and the negotiation process using the profile information described in conjunction with FIGS. 1 and 3, and interrupting the line connection and allocation process using H.245 if the negotiation process using the profile information is successfully completed, can be considered.

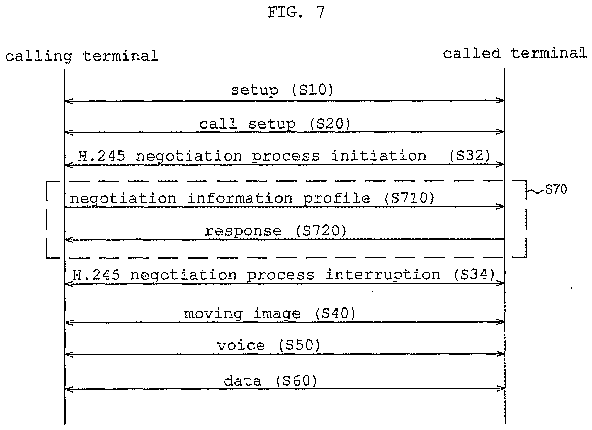

FIG. 7 is a flowchart illustrating a video telephony service method according to a fourth embodiment of the present invention.

First, when a calling mobile communication terminal attempts a call to use video telephony service, a setup process is performed using H.223 at step S10 and, thereafter, a call is set up at step S20.

After call setup has been completed, a general H.245 negotiation process (refer to FIG. 3), that is, a line connection and allocation process is initiated at step S32. The negotiation process using profile information for video telephony and the H.245 negotiation process are performed at the same time. For this purpose, when the calling mobile communication terminal transmits the previously stored profile information to the mobile communication system, the mobile communication system transmits the received profile information to the called mobile communication terminal at step S710. Thereafter, the called mobile communication terminal consults the profile information of the calling side, which is received from the mobile communication system, and transmits a response signal to the calling mobile communication terminal through the mobile communication system after establishing conditions for video telephony if it is determined that video telephony is possible, -at step S720.

As described above, since the response to the reception of the profile information is received from the called mobile communication terminal, that is, negotiation using the profile information is successfully performed, the general H.245 negotiation process, which was also being performed between calling and called mobile communication terminals, is interrupted at step S34. Thereafter, at steps S40 to S60, moving images, voice, and data (pictures, photographs and the like) are exchanged between the calling and called mobile communication terminals under the conditions negotiated at step 70.

In the case where, in the present embodiment, a plurality of pieces of profile information are stored in each of the mobile communication terminals, the plurality of pieces of profile information may be transmitted together or sequentially at the step S710 of transmitting negotiation information profile, and the mobile communication terminal that receives the profile information may select an optimal profile and transmit a response signal, including information about the selected profile.

Meanwhile, although not shown in FIG. 7, line connection and allocation are performed based on the general H.245 negotiation process described at step 32 in the case where no response signal has been transmitted from the receiving and calling mobile communication terminals within a designated period after the profile information has been transmitted to the called mobile communication terminals.

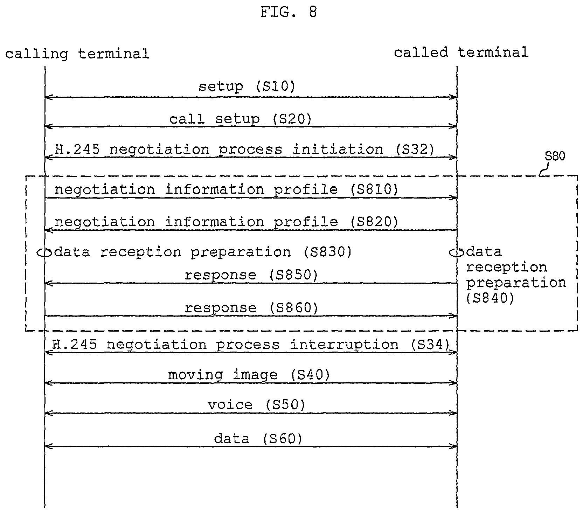

FIG. 8 is a flowchart illustrating a video telephony service method according to a fifth embodiment of the present invention.

First, when a calling mobile communication terminal attempts a call to use video telephony service, a setup process is performed using H.223 at step S10 and, thereafter, a call is set up at step S20.

After call setup has been completed, a general H.245 negotiation process (refer to FIG. 3), that is, a line connection and allocation process, is initiated at step S32. A negotiation process using profile information for video telephony and the H.245 negotiation process are performed at the same time. For this purpose, when the calling mobile communication terminal transmits the previously stored profile information to the mobile communication system, the mobile communication system transmits the received profile information to the called mobile communication terminal at step S810. In the same manner, when the called mobile communication terminal transmits the previously stored profile information thereof to the mobile communication system, the mobile communication system transmits the profile information to the calling mobile communication .terminal at step S820. The calling and called mobile communication terminals, each having received the corresponding profile information, get ready to receive data from the other party while waiting for a response from the other party at steps S830 and S840.

Thereafter, the called mobile communication terminal consults the profile information of the calling side, which is received from the mobile communication system, and transmits a response signal to the calling mobile communication terminal through the mobile communication system after establishing conditions for video telephony if it is determined that video telephony is possible, at step S850. In the same manner, the calling mobile communication terminal consults the profile information of the receiving side, which is received from the mobile communication system, and transmits a response signal to the called mobile communication terminal through the mobile communication system after establishing conditions for video telephony if it is determined that video telephony is possible, at step S860.

As described above, since the response to the reception of the profile information is received from the called mobile communication terminal, that is, negotiation using the profile information is successfully performed, the general H.245 negotiation process, which was also being performed between the calling and called mobile communication- terminals, is interrupted at step S34. Thereafter, at steps S40 to S60, moving images, voice, and data (pictures, photographs and the like) are exchanged between the calling and called mobile communication terminals under the conditions negotiated at step 80.

In the case where, in the present embodiment, a plurality of pieces of profile information are stored in each of the mobile communication terminals, the plurality of pieces of profile information may be transmitted together or sequentially at steps S810 and S820 of transmitting negotiation information, and the mobile communication terminal which receives the profile information may select an optimal profile and transmit a response signal, including information about the selected profile.

Meanwhile, although not shown in FIG. 8, line connection and allocation are performed through the general H.245 negotiation process described at step 32 in the case where no response signal has been transmitted from the receiving and calling mobile communication terminals within a designated period after the profile information has been transmitted to the called mobile communication terminals.

As described above, in the fourth and fifth embodiments of the present invention, both the general H.245 negotiation process and the negotiation process based on profile information are performed, and video telephony is performed using the first protocol negotiated as a result of the two negotiation processes, so that the time required to perform the general H.245 negotiation process after the negotiation process based on the exchange of the profile information has been failed can be reduced.

Meanwhile, in the present invention, for example, the parameter 'NonStandard' of the user input indication messages defined by H.245 may be used to transmit the profile information of the mobile communication terminals, and an Object IDentifier (OID) may be transmitted along with the profile information so that the type of transmitted message can be identified. The OID is composed of an object field and a data field. The object field is an information field for indicating a business name, a protocol name for video telephony, the reason for message transmission, and the type of profile information, and the detailed information about a profile corresponding to the type of profile in the object field profile is stored in the data field.

In this case, the reason why the profile information can be classified into several pieces of profile information is because the types of voice codecs and video codecs, and the types of logical channels are limited by the characteristics of the hardware of the mobile communication terminals.

### Table 1 shows an example of object identifiers.

**Table 1**

| Object identifier | | Meanings |
|---|---|---|
| Object | Data | |
| 1 1 2 1 | profile 1 | SKT 3G-324M profile 1 |
| 1 1 2 2 | profile 2 | SKT 3G-324M profile 2 |
| 1 1 2 3 | profile 3 | SKT 3G-324M profile 3 |
| 1 1 3 1 | profile 1 response | SKT 3G-324M profile 1 response |
| 1 1 3 2 | profile 2 response | SKT 3G-324M profile 2 response |
| 1 1 3 3 | profile 3 response | SKT 3G-324M profile 3 response |

The following is an example of profile information in the case where AMR is used for a voice codec, and H.263 is used for a video codec.

```
       * Master/slave determination
       calling terminal : Master
       called terminal : Slave
       * Multiplex
       H.223 capability
       video : AL2, AL3 support
       audio : AL2 support
       NSRP support
       H.223Annex A, B apply
       Detailed data
       videoWithAL2 TRUE,
       videoWithAL3 TRUE,
       audioWithAL2 TRUE,
       maximumAl2SDUSize 6000,
       maximumA13SDUSize 6000,
       maximumDelayJitter 0,
       maxMUXPDUSizeCapability TRUE,
       nsrpSupport TRUE,
       mobileOperationTransmitCapability
               {
                 modeChangeCapability TRUE,
                 h223AnnexA TRUE,
                 h223AnnexADoubleFlag TRUE,
                 h223AnnexB TRUE,
                 h223AnnexBwithHeader TRUE
               }
       Audio
       AMR 12.2Kbps use
       Detailed data
       capabilityIdentifier standard : {0 0 8 245 1 1 1},
       maxBitRate 122,
       collapsing
                   parameterIdentifier standard : 0,
                   parameterValue unsignedMin : 1
        }
       Video
       H.263 baseline QCIF use
       Detailed data
       qcifMPI 2,
       maxBitRate 560,
       unrestrictedVector FALSE, (Annex D)
        arithmeticCoding FALSE, (Annex E)
        advancedPrediction FALSE, (Annex F)
       pbFrames FALSE, (Annex G)
        temporalSpatialTradeOffCapability FALSE
       Multiplex table entry
        LCN1 : Audio, LCN2 : Video
```

| Table entry number | MultiplexEntryDescriptor | others |
|---|---|---|
| 1 | {LCN1, RC UCF} | |
| 2 | {LCN2, RC UCF} | |
| 3 | {LCN1, RC32}, {LCN2, RC UCF} | AMR 31byte, Video |
| 4 | {LCN1, RC7}, {LCN2, RC UCF} | AMR 6byte, Video |
| 5 | {LCN1, RC7}, {LCN2, RC UCF} | AMR 1byte, Video |

### Logical channels

1 : Audio (AMR), AL2 use
   H.223 parameter
   adaptationLayerType al2WithoutSequenceNumbers : NULL, segmentableFlag FALSE
2 : Video(H.263), AL2 use
   H.223 parameter
   adaptationLayerType al2WithSequenceNumbers : NULL, segmentableFlag TRUE
It should be understood that the above-described embodiments are illustrative but not restrictive. The scope of the present invention is defined by the appended claims rather than the detailed description, and it should be appreciated that the modifications that may be derived from the claims and the equivalents thereof are all included in the scope of the present invention.

### Industrial Applicability

In accordance with the present invention, a complicated negotiation process for video telephony initiation can be - simplified -and,- -therefore, the time required to initiate video telephony can be reduced, so that a delay time perceived by a user when video telephony is performed can be minimized.

Furthermore, in the case where profile information for video telephony is exchanged between calling and called mobile communication terminals, the transmission and reception time of data can be clarified, so that the video telephony initiation time can be further reduced.

Furthermore, the negotiation process and the general H.245 negotiation process based on the exchange of profile information or video telephony are simultaneously initiated, and the video telephony is performed using a protocol that is first negotiated when both negotiation processes are performed, so that the time required to perform the general H.245 negotiation process in the event of failure of the negotiation process based on the exchange of the profile information can be reduced.

## Claims

1. A video telephony service method between mobile communication terminals, which can perform video telephony through a mobile communication system, in a mobile communication network, each of the mobile communication terminals storing profile information, the method comprising:
a first step of the mobile communication system setting up a call between a calling mobile communication terminal and a called mobile communication terminals, as the calling mobile communication terminal attempts the call;
a second step of the mobile communication system transmitting the profile information of the calling mobile communication terminal to the called mobile communication terminal, as the calling mobile communication terminal transmits the profile information thereof to the mobile communication system;
wherein when the profile information for the video telephony is transmitted, an object identifier for identifying the profile information is transmitted along with the profile information; and
wherein the object identifier comprising an object field and a data field, the object field comprising a mobile communication business name, a video telephony protocol name, a reason for message transmission and a type of profile information, and the data field comprising stored detailed information about a profile corresponding to the type of profile in the object field profile;
a third step of the called mobile communication terminal consulting the profile information received from the calling mobile communication terminal, and transmitting a response signal to the mobile communication system after establishing conditions for video telephony if it is determined that video telephony is possible for a received profile, and the mobile communication system transmitting the response signal to the calling mobile communication terminal; and
after the third step, a fourth step of the mobile communication system establishing a communication path between the calling mobile communication terminal and the called mobile communication terminal.

2. The video telephony service method of claim 1, wherein the third step consists of performing a master/slave decision and response process, a terminal characteristic information exchange process, a multiplexing information exchange process, a logical channel generation process for voice transmission, and a logical channel generation process for video transmission, thus allowing negotiation to be performed between the calling mobile communication terminal and the called mobile communication terminal, if the called mobile communication terminal does not transmit a signal in response to the profile information to the calling mobile communication terminal within a designated period.

3. The video telephony service method of claim 1, further comprising:
a step of initiating a line connection and allocation process between the calling mobile communications terminal and the called mobile communication terminal;
a step of the mobile communication system transmitting the profile information of the calling mobile communication terminal to the called mobile communication terminal, as the calling mobile communication terminal transmits the profile information thereof to the mobile communication system;
a fifth step of interrupting the line connection and allocation process initiated between the calling mobile communications terminal and the called mobile communications terminal; and
a sixth step of the mobile communication system establishing a communication path between the calling mobile communications terminal and the called mobile communication terminals.

4. The method according to any one of claims 1 to 3, wherein the profile information for the video telephony comprises voice codec information, video codec information, multiplexing information, and logical channel information.

5. The method according to any one of claims 1 to 3, wherein when the video telephony is performed using a H.324M protocol the profile, information for the video telephony is transmitted through a user input indication message of H.245 included in the H.324M protocol.

6. The method according to any one of claims 1 to 3, wherein the profile information for video telephony comprises a plurality of pieces of profile information, each of which has a priority, and is stored in the mobile communication terminal, and the step of the mobile communication terminal transmitting the profile information is the step of transmitting profile information having a highest priority and then transmitting the plurality of pieces of profile information in descending order of priority when the mobile communication terminal that has received the profile information does not transmit a response signal.

7. The method according to claims 1 or 2, further comprising, after the second step and before the third step, as the called mobile communication terminal transmits the profile information to the mobile communication system,
a fifth step of the mobile communication system transmitting the profile information of the called mobile communication terminal to the calling mobile communication terminal, and
a sixth step of the calling and called mobile communication terminals preparing for the reception of data;
after the third step and before the fourth step,
a seventh step of the calling mobile communication terminal consulting the profile information received from the called mobile communication terminal, and transmitting a response signal to the mobile communication system after establishing conditions for video telephony if it is determined that video telephony is possible for a received profile, and the mobile communication system transmitting the response signal to the called mobile communication terminal.

8. The method according to claim 3, further comprising,
after the third step and before the fourth step, as the called mobile communication terminal transmits the profile information to the mobile communication system,
the sixth step of the mobile communication system transmitting profile information of the called mobile communication terminal to the calling mobile communication terminal, and the seventh step of the calling and called mobile communication terminals preparing for the reception of data/ after the third step and before the fourth step,
an eighth step of the calling mobile communication terminal consulting the profile information received from the called mobile communication terminal, and transmitting a response signal to the mobile communication system after establishing conditions for video telephony if it is determined that video telephony is possible for a received profile, and the mobile communication system transmitting the response signal to the called mobile communication terminal.

9. The method according to claim 3, wherein the line connection and allocation process of the second step comprises a master/slave decision and response process, a terminal characteristic information exchange process, a multiplexing- information exchange process, a logical channel generation process for voice transmission, and a logical channel generation process for video transmission.

## Patentansprüche

1. Videotelefoniedienstverfahren zwischen Mobilkommunikationsgeräten, die Videotelefonie durch ein Mobilkommunikationssystem ausführen können, in einem Mobilkommunikationsnetz, wobei jedes der Mobilkommunikationsgeräte Profilinformationen speichert, wobei das Verfahren Folgendes umfasst:
einen ersten Schritt, in dem das Mobilkommunikationssystem einen Ruf zwischen einem rufenden Mobilkommunikations-Endgerät und einem gerufenen Mobilkommunikationsgerät aufbaut, wenn das rufende Mobilkommunikations-Endgerät den Ruf versucht;
einen zweiten Schritt, in dem das Mobilkommunikationssystem die Profilinformationen des rufenden Mobilkommunikations-Endgerätes an das gerufene Mobilkommunikations-Endgerät sendet, wenn das rufende Mobilkommunikations-Endgerät dessen Profilinformationen an das Mobilkommunikationssystem sendet;
wobei, wenn die Profilinformationen für die Videotelefonie gesendet werden, ein Objektidentifizierer zum Identifizieren der Profilinformationen zusammen mit den Profilinformationen gesendet wird; und
wobei der Objektidentifizierer ein Objektfeld und ein Datenfeld umfasst, wobei das Objektfeld einen Mobilkommunikationsgeschäftsnamen, einen Videotelefonieprotokollnamen, einen Grund für die Nachrichtenübertragung und einen Typ von Profilinformationen umfasst, und das Datenfeld gespeicherte detaillierte Informationen über ein Profil, das dem Profiltyp in dem Objektfeldprofil entspricht, umfasst;
einen dritten Schritt, in dem das gerufene Mobilkommunikations-Endgerät die Profilinformationen konsultiert, die von dem rufenden Mobilkommunikations-Endgerät empfangen wurden, und ein Antwortsignal an das Mobilkommunikationssystem sendet, nachdem Bedingungen für die Videotelefonie festgelegt wurden, wenn bestimmt wird, dass Videotelefonie für ein empfangenes Profil möglich ist, und das Mobilkommunikationssystem das Antwortsignal an das rufende Mobilkommunikations-Endgerät sendet; und
nach dem dritten Schritt, einen vierten Schritt, in dem das Mobilkommunikationssystem einen Kommunikationspfad zwischen dem rufenden Mobilkommunikations-Endgerät und dem gerufenen Mobilkommunikations-Endgerät festlegt.

2. Videotelefoniedienstverfahren nach Anspruch 1, wobei der dritte Schritt aus dem Ausführen eines Master/Slave-Entscheidungs- und -Antwortprozesses, eines Endgeräteigenschaften-Informationsaustauschprozesses, eines Multiplexierungsinformationsaustauschprozesses, eines Logikkanalgenerierungsprozesses zur Videoübertragung und eines Logikkanalgenerierungsprozesses zur Videoübertragung besteht, wodurch eine Negoziierung zwischen dem rufenden Mobilkommunikations-Endgerät und dem gerufenen Mobilkommunikations-Endgerät ausgeführt werden kann, wenn das gerufene Mobilkommunikations-Endgerät nicht innerhalb eines bezeichneten Zeitraums ein Signal als Antwort auf die Profilinformationen an das rufende Mobilkommunikations-Endgerät sendet.

3. Videotelefoniedienstverfahren nach Anspruch 1, des Weiteren umfassend:
einen Schritt zum Initiieren eines Leitungsverbindungs- und -zuweisungsprozesses zwischen dem rufenden Mobilkommunikations-Endgerät und dem gerufenen Mobilkommunikations-Endgerät;
einen Schritt, in dem das Mobilkommunikationssystem die Profilinformationen des rufenden Mobilkommunikations-Endgerätes an das gerufene Mobilkommunikations-Endgerät sendet, wenn das rufende Mobilkommunikations-Endgerät dessen Profilinformationen an das Mobilkommunikationssystem sendet;
einen fünften Schritt zum Unterbrechen des zwischen dem rufenden Mobilkommunikations-Endgerät und dem gerufenen Mobilkommunikations-Endgerät initiierten Leitungsverbindungs- und -zuweisungsprozesses; und
einen sechsten Schritt, in dem das Mobilkommunikationssystem einen Kommunikationspfad zwischen dem rufenden Mobilkommunikations-Endgerät und dem gerufenen Mobilkommunikationsgerät herstellt.

4. Verfahren nach einem der Ansprüche 1 bis 3, wobei die Profilinformationen für die Videotelefonie Sprachcodec-Informationen, Video-Codec-Informationen, Multiplexierungsinformationen und Logikkanal-Informationen umfassen.

5. Verfahren nach einem der Ansprüche 1 bis 3, wobei, wenn die Videotelefonie unter Verwendung eines H.324M-Protokolls ausgeführt wird, die Profilinformationen für die Videotelefonie durch eine Nutzereingabe-Hinweisnachricht von H.245 gesendet werden, die in dem H.324M-Protokoll enthalten ist.

6. Verfahren nach einem der Ansprüche 1 bis 3, wobei die Profilinformationen für Videotelefonie mehrere Profilinformationsteile umfassen, die jeweils eine Priorität besitzen und in dem Mobilkommunikations-Endgerät gespeichert werden, und der Schritt, in dem das Mobilkommunikations-Endgerät die Profilinformationen sendet, der Schritt ist, in dem Profilinformationen, die die höchste Priorität besitzen, gesendet werden und dann die mehreren Profilinformationsteile in absteigender Prioritätsreihenfolge gesendet werden, wenn das Mobilkommunikations-Endgerät, das die Profilinformationen empfangen hat, kein Antwortsignal sendet.

7. Verfahren nach den Ansprüchen 1 oder 2, das, nach dem zweiten Schritt und vor dem dritten Schritt, wenn das gerufene Mobilkommunikations-Endgerät die Profilinformationen an das Mobilkommunikationssystem sendet, des Weiteren Folgendes umfasst:
einen fünften Schritt, in dem das Mobilkommunikationssystem die Profilinformationen des gerufenen Mobilkommunikations-Endgerätes an das rufende Mobilkommunikations-Endgerät sendet, und
einen sechsten Schritt, in dem sich das rufende und das gerufene Mobilkommunikationsgerät auf den Empfang von Daten vorbereiten;
nach dem dritten Schritt und vor dem vierten Schritt,
einen siebten Schritt, in dem das rufende Mobilkommunikations-Endgerät die Profilinformationen konsultiert, die von dem gerufenen Mobilkommunikations-Endgerät empfangen wurden, und ein Antwortsignal an das Mobilkommunikationssystem sendet, nachdem Bedingungen für die Videotelefonie festgelegt wurden, wenn bestimmt wird, dass eine Videotelefonie für ein empfangenes Profil möglich ist, und das Mobilkommunikationssystem das Antwortsignal an das gerufene Mobilkommunikations-Endgerät sendet.

8. Verfahren nach Anspruch 3, des Weiteren umfassend:
nach dem dritten Schritt und vor dem vierten Schritt, wenn das gerufene Mobilkommunikations-Endgerät die Profilinformationen an das Mobilkommunikationssystem sendet, den sechsten Schritt, in dem das Mobilkommunikationssystem Profilinformationen des gerufenen Mobilkommunikations-Endgerätes an das rufende Mobilkommunikations-Endgerät sendet, und den siebten Schritt, in dem das rufende und das gerufene Mobilkommunikationsgerät sich auf den Empfang von Daten vorbereiten,
nach dem dritten Schritt und vor dem vierten Schritt,
einen achten Schritt, in dem das rufenden Mobilkommunikations-Endgerät die Profilinformationen konsultiert, die von dem gerufenen Mobilkommunikations-Endgerät empfangen wurden, und ein Antwortsignal an das Mobilkommunikationssystem sendet, nachdem Bedingungen für eine Videotelefonie festgelegt wurden, wenn bestimmt wird, dass eine Videotelefonie für ein empfangenes Profil möglich ist, und das Mobilkommunikationssystem das Antwortsignal an das gerufene Mobilkommunikations-Endgerät sendet.

9. Verfahren nach Anspruch 3, wobei der Leitungsverbindungs- und -zuweisungsprozess des zweiten Schrittes einen Master/Slave-Entscheidungs- und Antwortprozess, einen Endgeräteigenschaften-Informationsaustauschprozess, einen Multiplexierungsinformationsaustauschprozess, einen Logikkanalgenerierungsprozess zur Videoübertragung und einen Logikkanalgenerierungsprozess zur Videoübertragung umfasst.

## Revendications

1. Procédé de service visiophonique entre des terminaux de communication mobiles, qui peuvent effectuer une visiophonie au moyen d'un système de communication mobile, dans un réseau de communication mobile, chacun des terminaux de communication mobile stockant des informations de profil, le procédé comprenant:
une première étape d'établissement par le système de communication mobile d'un appel entre un terminal de communication mobile appelant et un terminal de communication mobile appelé, lorsque le terminal de communication mobile appelant tente l'appel;
une seconde étape de transmission par le système de communication mobile des informations de profil du terminal de communication mobile appelant au terminal de communication mobile appelé, lorsque le terminal de communication mobile appelant transmet les informations de profil de celui-ci au système de communication mobile;
dans lequel, lorsque les informations de profil pour la visiophonie sont transmises, un identificateur d'objet pour identifier les informations de profil est transmis avec les informations de profil; et
dans lequel l'identificateur d'objet comprend un champ d'objet et un champ de données, le champ d'objet comprenant un nom commercial de communication mobile, un nom de protocole de visiophonie, un motif de transmission de message et un type d'informations de profil, et le champ de données comprenant des informations détaillées stockées sur un profil correspondant au type de profil dans le profil de champ d'objet;
une troisième étape de consultation par le terminal de communication mobile appelé des informations de profil reçues du terminal de communication mobile appelant, et de transmission d'un signal de réponse au système de communication mobile après avoir établi des conditions pour la visiophonie s'il est déterminé que la visiophonie est possible pour un profil reçu, et de transmission par le système de communication mobile du signal de réponse au terminal de communication mobile appelant; et
après la troisième étape, une quatrième étape dans laquelle le système de communication mobile établit un chemin de communication entre le terminal de communication mobile appelant et le terminal de communication mobile appelé.

2. Procédé de service visiophonique selon la revendication 1, dans lequel la troisième étape consiste à effectuer un processus de décision et de réponse maître / esclave, un processus d'échange d'informations de caractéristiques de terminal, un processus d'échange d'informations de multiplexage, un processus de génération de canal logique pour la transmission vocale, et un processus de génération de canal logique pour la transmission vidéo, permettant ainsi à la négociation entre le terminal de communication mobile appelant et le terminal de communication mobile appelé d'être effectuée, si le terminal de communication mobile appelé ne transmet pas un signal en réponse aux informations de profil au terminal de communication mobile appelant pendant une période désignée.

3. Procédé de service visiophonique selon la revendication 1, comprenant en outre:
une étape d'initiation d'un processus de connexion et d'allocation de ligne entre le terminal de communication mobile appelant et le terminal de communication mobile appelé;
une étape de transmission par le système de communication mobile des informations de profil du terminal de communication mobile appelant au terminal de communication mobile appelé, lorsque le terminal de communication mobile appelant transmet les informations de profil de celui-ci au système de communication mobile;
une cinquième étape d'interruption du processus de connexion et d'allocation de ligne initié entre le terminal de communication mobile appelant et le terminal de communication mobile appelé; et
une sixième étape d'établissement par le système de communication mobile d'un chemin de communication entre le terminal de communication mobile appelant et le terminal de communication mobiles appelé.

4. Procédé selon l'une quelconque des revendications 1 à 3, dans lequel les informations de profil pour la visiophonie comprennent des informations de codec vocal, des informations de codec vidéo, des informations de multiplexage, et des informations de canal logique.

5. Procédé selon l'une quelconque des revendications 1 à 3, dans lequel lorsque la visiophonie est effectuée en utilisant un protocole H.324M, les informations de profil pour la visiophonie sont transmises par l'intermédiaire d'un message d'indication d'entrée d'utilisateur de H.245 inclus dans le protocole H.324M.

6. Procédé selon l'une quelconque des revendications 1 à 3, dans lequel les informations de profil pour la visiophonie comprennent une pluralité d'éléments d'information de profil, chacun ayant une priorité, et sont stockées dans le terminal de communication mobile, et l'étape de transmission par le terminal de communication mobile des informations de profil est l'étape de transmission des informations de profil ayant une priorité la plus élevée, puis de transmission de la pluralité d'éléments d'information de profil dans l'ordre décroissant de priorité lorsque le terminal de communication mobile qui a reçu les informations de profil ne transmet pas de signal de réponse.

7. Procédé selon les revendications 1 ou 2, comprenant en outre, après la deuxième étape et avant la troisième étape, lorsque terminal de communication mobile appelé transmet les informations de profil au système de communication mobile, une cinquième étape de transmission par le système de communication mobile des informations de profil du terminal de communication mobile appelé au terminal de communication mobile appelant, et
une sixième étape de préparation des terminaux de communication mobile appelant et appelé pour la réception de données;
après la troisième étape et avant la quatrième étape,
une septième étape de consultation par le terminal de communication mobile appelant des informations de profil reçues du terminal de communication mobile appelé, et de transmission d'un signal de réponse au système de communication mobile après avoir établi des conditions pour la visiophonie s'il est déterminé que la vidéophonie est possible pour un profil reçu, et de transmission par le système de communication mobile du signal de réponse au terminal de communication mobile appelé.

8. Procédé selon la revendication 3, comprenant en outre:
après la troisième étape et avant la quatrième étape, lorsque le terminal de communication mobile appelé transmet les informations de profil au système de communication mobile,
la sixième étape de transmission par le système de communication mobile d'informations de profil du terminal de communication mobile appelé au terminal de communication mobile appelant, et
la septième étape de préparation des terminaux de communication mobile appelant et appelé pour la réception de données après la troisième étape et avant la quatrième étape,
une huitième étape de consultation par le du terminal de communication mobile appelant des informations de profil reçues du terminal de communication mobile appelé, et de transmission d'un signal de réponse au système de communication mobile après avoir établi des conditions pour la visiophonie s'il est déterminé que la visiophonie est possible pour un profil reçu, et de transmission par le système de communication mobile du signal de réponse au terminal de communication mobile appelé.

9. Procédé selon la revendication 3, dans lequel le processus de connexion et d'allocation de ligne de la deuxième étape comprend un processus de décision et de réponse maître / esclave, un processus d'échange d'informations de caractéristiques de terminal, un processus d'échange d'informations de multiplexage, un processus de génération de canal logique pour la transmission vocale, et un processus de génération de canal logique pour la transmission vidéo.
